# EUROPEAN PATENT APPLICATION

(11) **EP 2 386 409 A1**
(43) Date of publication of application: **16.11.2011**
(21) Application number: 10388005.0
(22) Date of filing: 21.04.2010
(51) Int. Cl.: B32B 21/06, B32B 29/04, D21H 27/30, D21H 27/18, D21H 27/28, D21H 27/26, D21H 19/82, D21H 19/84

(54) **Paper foil for lamination of wood-based materials**

(71) Applicant: PKI Supply A/S, 7000 Fredericia (DK)
(72) Inventor: Thomsen, Hans Bay, 8700 Horsens (DK); Kristiansen, Harding, 5500 Middelfart (DK)
(74) Representative: Sundien, Thomas

(57) **Abstract**

The present invention concerns a paper laminate for a wood-based product comprising a paper foil, at least one layer of varnish and at least one layer of coating, where the at least one layer of varnish is applied to the front side of the paper foil and where the at least one layer of coating is applied to the rear side of the paper foil and where the at least one layer of coating increases the impermeability of the paper laminate. The present invention further relates to a method for manufacturing a paper laminate comprising the step of applying at least one layer of coating to the rear side of a paper foil. Finally, the present invention concerns a wood-based material laminated with the paper laminate of the present invention.

## Description

### FIELD OF THE INVENTION

Wood-based materials are widely used in products like furniture, kitchens, etc. The wood-based materials used in these products are mostly particle boards, fiberboard or chipboard. These boards are commonly known as engineered wood products and are manufactured from wood particles, such as wood chips, sawmill shavings, saw dust or even recycled material, and a resin or other suitable binder, which is pressed and/or extruded. Thus, a particle board is a composite material. Several different resins can be used as binder. A majority of these resins are formaldehyde based resins.

The use of formaldehyde-based resins is encumbered with one major safety issue, namely the release of formaldehyde into the air. At low concentrations in air, formaldehyde can irritate the eyes and mucous membranes, resulting in watery eyes. Formaldehyde inhaled at this concentration may cause headaches, a burning sensation in the throat and breathing difficulties, as well as triggering or aggravating asthma symptoms. In addition, formaldehyde is a known human carcinogen. Although wood-based materials produced to modern standards are viewed as safe, it is desired to reduce the release of formaldehyde to an absolute minimum.

A large part of the wood-based materials used in furniture are laminated with paper foil. By reducing the content of formaldehyde in wood-based materials, the properties of these materials change accordingly, mostly to the worse, meaning they deteriorate. An important aesthetic property of paper laminated wood-based materials is the surface resistance to liquids or moisture. The surface resistivity concerns for example a situation in every day life, where a glass with a wet bottom or a humid cloth is placed on the paper laminated wood-based material. In such a situation, the paper laminated wood-based material is not (or only to a very limited extent) allowed to bulge. Traditionally, from one side of the paper laminate to the other. The paper laminate will also to a large extent prevent or even prohibit the release of formaldehyde from the particle boards to which the paper laminate can be laminated. When the paper laminate is used to laminate for example particle boards, the lamination process can take place by using a much smaller amount of adhesive between the particle board and the paper laminate. The reduced amount of adhesive needed is an effect of the coating applied to the rear side of the paper foil. Further, due to the coating and due to the use of a much smaller amount of adhesive between for example a wood-based material and the paper laminate, the fibers and particles of the wood-based material will generally erect less when the paper laminate is exposed to liquids and/or moisture. Thus, a wood-based material laminated with the paper laminate of the present invention will generally have a much higher quality. Apart from the improved resistivity to liquids and moisture, the paper laminate will also be able to reduce or even eliminate the release of formaldehyde through the paper laminate when laminated to wood-based material comprising formaldehyde. Hence, the emission of Volatile Organic Compounds (VOC) will be very limited, if any.

In another embodiment of the paper laminate, the at least one layer of varnish is applied between the paper foil and the at least one layer of coating. This is advantageous as it will contribute further to the impermeable properties of the paper laminate.

In a further embodiment of the paper laminate, the at least one layer of coating is a polymer dispersion with filler or without filler.

In yet another embodiment of the paper laminate, the at least one layer of coating is a copolymer with filler or without filler.

The present invention further relates to a method for manufacturing a paper laminate comprising the step of applying at least one layer of coating to the rear side of a paper foil. This manufacturing method is advantageous in that it the wood-based materials are laminated with a paper foil with one outer layer of varnish applied on the upper side of the paper foil. Outer layer means that the layer of varnish constitutes the exterior of the finished paper laminated wood-based material. However, with the use of this known paper lamination method on wood-based materials with reduced content of formaldehyde, the requirements for surface resistivity cannot be met. To accommodate the requirements of surface resistivity, experiments have been performed with paper foils having several layers of varnish. The results of these experiments have so far not proved to be feasible. In addition, it is today not possible to mass-produce paper foil with several layers of varnish without rebuilding the entire manufacturing setup and changing the manufacturing processes. Further, the material costs of such a paper foil will be higher due to the several layers of varnish applied.

The failure resulting from using a known lamination method on wood-based materials with reduced content of formaldehyde is among others caused by an increase in the permeability of the wood-based material. Hence, wood-based materials with higher content of formaldehyde are more impermeable. Consequently, the paper laminate used will have to be more impermeable than the known paper laminate comprising a paper foil and one layer of varnish. As described, this impermeability can, however, not be obtained by increasing the number of varnish layers.

### SUMMARY OF THE INVENTION

The present invention concerns a paper laminate for a wood-based product comprising a paper foil, at least one layer of varnish and at least one layer of coating, where the at least one layer of varnish is applied to the front side of the paper foil and where the at least one layer of coating is applied to the rear side of the paper foil and where the at least one layer of coating increases the impermeability of the paper laminate. This is advantageous as the paper laminate will prevent almost any migration of for example liquids or moisture is compatible with existing methods for manufacturing paper laminate. This is among others because the coating dries very quickly.

In another embodiment of the method for manufacturing a paper laminate, the method further comprises the step of applying at least one layer of varnish to the front side of the paper foil.

In a further embodiment of the method for manufacturing a paper laminate, the method comprises the step of applying the at least one layer of varnish between the paper foil and the coating.

The present invention further relates to a wood-based material comprising a paper laminate according to the above. The advantages of this wood-based material laminated with the paper laminate of the present invention are as described above.

### BRIEF DESCRIPTION OF THE DRAWINGS

In the following, preferred embodiments of the invention will be described referring to the figures, where
figure 1 illustrates a piece of a paper laminate for application on a wood-based material, and where
figure 2 illustrates a wood-based material laminated with a laminate according to the present invention.

### DESCRIPTION OF EMBODIMENTS

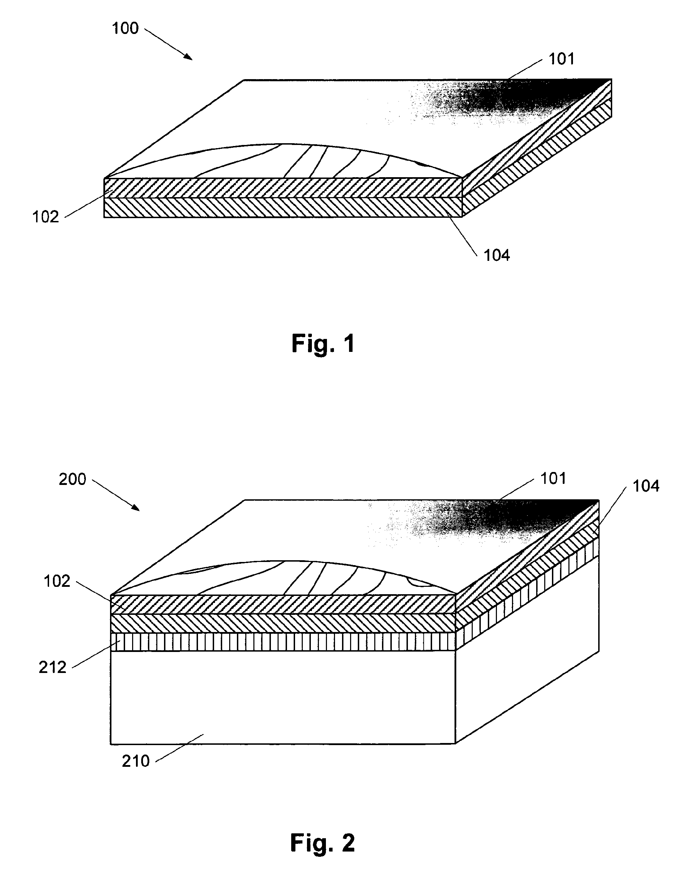

Figure 1 illustrates a piece of a paper laminate 100 for application on a wood-based material (not shown), comprising a paper foil 102 and a coating 104. The paper laminate further comprises a layer of varnish 101 (illustrated as semi-transparent) applied to the front side or face of the paper foil 102. The coating 104 is applied to the rear side or underside of the paper foil 102. The coating 104 serves as an impermeable barrier such that for example liquids and moisture cannot reach the wood-based material. The coating can be a polymer and/or copolymer dispersion with/without filler. Several layers of coating 104 can optionally be applied to the paper foil 102.

Figure 2 illustrates a paper laminated wood-based material 200 according to the present invention. The paper laminated wood-based material 200 comprises a wood-based material 210 which is laminated with a paper laminate 100, comprising a paper foil 102 and a coating 104 (see figure 1). The impermeable barrier of the paper laminate 100 ensures that no liquids or moisture can reach the wood-based material 210. Thus, the fibers or particles of the wood-based material will not erect to the same extent as in the prior art. The paper laminate 100 can therefore advantageously be applied to wood-based materials that have a low content of formaldehyde or any other engineered wood-based material with high permeability. In addition to increasing the impermeability of the paper laminate 100, the coating 104 also ensures that the amount of adhesive 212 used to apply the paper laminate to the wood-based material is reduced compared to the prior art. This is among others due to a better adherence between the adhesive 212 and the coating 104. Further, by applying the paper laminate 100 to the wood-based material 210, the wood-based material 210 is encapsulated, whereby the release of volatile organic compounds (VOC) is reduced or even prohibited. This is also the case for the formaldehyde of the wood-based material 200.

## Claims

1. A paper laminate (100) for a wood-based product, comprising a paper foil (102), at least one layer of varnish (101) and at least one layer of coating (104), where said at least one layer of varnish (101) is applied to the front side of said paper foil (102) and where said at least one layer of coating (104) is applied to the rear side of said paper foil (102) and where said at least one layer of coating (104) increases the impermeability of said paper laminate (100).

2. A paper laminate (100) according to claim 1, where said at least one layer of varnish (101) is applied between said paper foil (102) and said at least one layer of coating (104).

3. A paper laminate (100) according to claims 1-2, where said at least one layer of coating (104) is a polymer dispersion with filler.

4. A paper laminate (100) according to claims 1-2, where said at least one layer of coating (104) is a polymer without filler.

5. A paper laminate (100) according to claims 1-2, where said at least one layer of coating (104) is a copolymer with filler.

6. A paper laminate (100) according to claims 1-2, where said at least one layer of coating (104) is a copolymer without filler.

7. A method for manufacturing a paper laminate (100), comprising the step of applying at least one layer of coating (104) to the rear side of a paper foil (102).

8. A method for manufacturing a paper laminate (100) according to claim 7, further comprising the step of applying at least one layer of varnish (101) to the front side of said paper foil (102).

9. A method for manufacturing a paper laminate (100) according to claims 7-8, further comprising the step of applying said at least one layer of varnish between said paper foil (102) and said coating (104).

10. A wood-based material (210) comprising a paper laminate (100) according to claims 1-6.
